# EUROPEAN PATENT SPECIFICATION

(11) **EP 4 370 936 B1**
(45) Date of publication and mention of the grant of the patent: **31.12.2025**
(21) Application number: 22748726.1
(22) Date of filing: 12.07.2022
(51) Int. Cl.: G01N 35/10, B01L 9/00, G01N 30/00

(54) **MINICOLUMN RETAINING APPARATUS AND METHOD OF USE**
MINISÄULENHALTEVORRICHTUNG UND VERFAHREN ZUR VERWENDUNG
APPAREIL DE RETENUE DE MINI-COLONNES ET PROCÉDÉ D'UTILISATION

(30) Priority: 12.07.2021 US 202163203173 P
(43) Date of publication of application: 22.05.2024
(73) Proprietor: GENENTECH, INC., South San Francisco, CA 94080-4990 (US)
(72) Inventor: RUMMEL, Nicholas, San Francisco, CA 94080-4990 (US); DVORNICKY, James, San Francisco, CA 94080-4990 (US)
(74) Representative: Brodbeck, Michel
(86) International application number: PCT/US2022/073622
(87) International publication number: WO 2023/288208

(56) References cited:
- CN-A- 107 126 997
- US-A1- 2016 096 179

## Description

### BACKGROUND

Biotechnology and pharmaceutical companies often rely on fast, high-throughput screening processes to drive research forward. In particular, arrays of chromatographic samples are often used for protein separation/purification, process development, method optimization and parameter screening as well as sample preparation prior to subsequent analysis. A common format for these chromatographic samples is miniaturized chromatography columns, sometimes referred to as RoboColumns or minicolumns. These miniaturized columns are commercially available prepacked with resin or other chromatography medium that is suitable for separation/purification of a particular target protein. The miniaturized columns can be individually arranged on a commonly used 96-well microplate according to application requirements. In many applications, a robotic liquid handling workstation is utilized for parallel chromatographic separations, such as a Freedom Evo^{™} system available from Tecan Group headquartered in Männedorf, Switzerland.

US 2016/096179 A1 discloses sample tube racks having retention bars to retain sample tubes in the racks during processing of the contents of the sample tubes.

One problem that emerges when using a robotic liquid handling workstation with an array of miniaturized chromatography columns is that the columns may be inadvertently lifted out of the microplate that holds them when robotically controlled needles are being withdrawn from the columns. This can cause the process to be halted, can cause samples to be destroyed and can cause significant equipment damage if the robotic system subsequently crashes.

Accordingly, what is needed and is not provided by the prior art are improved systems and methods for temporarily maintaining miniaturized chromatography columns in multi-well microplates when being used with robotic liquid handling systems. The innovations described herein solve these unmet needs and provide additional advantages.

### SUMMARY OF THE DISCLOSURE

According to the present invention, a retaining apparatus according to claim 1 configured to secure minicolumns in a holder plate is provided with a pair of laterally spaced apart upright supports and a horizontal beam spanning between the upright supports, holding them in the laterally spaced apart relationship. Each of the upright supports includes a downwardly facing surface and an upwardly facing surface. The downwardly facing surface is configured to slidably rest upon an upper surface of a minicolumn holder plate, and the upwardly facing surface is configured to slidably contact a lower surface of the holder plate. The horizontal beam has a plurality of vertical through-holes along its length. The through-holes have a diameter larger than an aspiration needle and smaller than an outside diameter of an upper portion of a minicolumn. The horizontal beam has a bottom surface that is spaced apart from the downwardly facing surfaces of the upright supports a distance that is greater than an amount that a minicolumn would protrude from an upper surface of a holder plate. The apparatus is configured to contact the holder plate only along peripheral edges of the holder plate and is configured to slide along the holder plate after minicolumns have been inserted therein, thereby retaining the minicolumns in the holder plate but allowing access to the minicolumns through the vertical holes in the horizontal beam.

The apparatus is integrally formed from a single piece of material. The horizontal beam may have at least three through-holes arranged in a single row along its length. In some embodiments, the horizontal beam has at least eight through-holes arranged in a single row along its length. The horizontal beam may have at least two rows of through-holes arranged along its length.

In some embodiments, the pair of upright supports each comprise at least two pairs of downwardly facing and upwardly facing surfaces, thereby allowing the horizontal beam to be positioned at at least two different heights above a minicolumn holder plate to accommodate different lengths of minicolumns. In some embodiments, the downwardly facing surface of each upright support is formed by a first inwardly protruding flange, and the upwardly facing surface of each upright support is formed by a second inwardly protruding flange. In these embodiments, each pair of first and second inwardly protruding flanges forms a gap there-between that has a thickness that is greater than a thickness of a minicolumn holder plate.

According to the present invention, a method according to claim 16 of retaining a plurality of minicolumns includes providing a holder plate having a plurality of vertical hole there-through. A plurality of minicolumns are placed into the plurality of holes in the holder plate such that at least some of the minicolumns are in a first row. A retaining apparatus slides along the holder plate until it covers the first row of minicolumns. The retaining apparatus has a vertical hole therethrough above each of the minicolumns. An aspiration needle is inserted through at least one of the vertical holes in the retaining apparatus and into at least one of the minicolumns in the first row. The aspiration needle is withdrawn from the at least one minicolumn and the at least one vertical hole in the retaining apparatus. The retaining apparatus is provided with a lower surface that contacts a top surface of any of the minicolumns in the first row that rise during the withdrawing step, the lower surface serving to retain the rising minicolumns in the holder plate.

In some embodiments, multiple aspiration needles are inserted into and withdrawn from multiple vertical holes in the retaining apparatus and multiple minicolumns in the first row simultaneously. The aspiration needle may be automatically moved vertically down into and then vertically withdrawn upwards from the minicolumn and vertical hole by a robotic liquid handling workstation. In some embodiments, the aspiration needle is automatically moved horizontally from the first row of minicolumns to a second row of minicolumns by a robotic liquid handling workstation.

### BRIEF DESCRIPTION OF THE DRAWINGS

A better understanding of the features and advantages of the present disclosure will be obtained by reference to the following detailed description that sets forth illustrative embodiments, in which the principles of the disclosure are utilized, and the accompanying drawings of which:
FIG. 1 is a side cross-sectional view showing a prior art chromatographic minicolumn;
FIG. 2 is a perspective view showing a prior art minicolumn array;
FIG. 3 is a perspective view showing the minicolumn array of FIG. 2 in use with a prior art robotic liquid handling workstation;
FIG. 4A is a top plan view showing an exemplary embodiment of a minicolumn retaining device constructed according to aspects of the disclosure;
FIG. 4B is side-elevation view showing the retaining device of FIG. 4A;
FIG. 4C is an end view showing the retaining device of FIG. 4A;
FIG. 4D is a perspective view showing the retaining device of FIG. 4A; and
FIG. 5 is a perspective view showing the device of FIGS. 4A-4D in use with a robotic liquid handling workstation according to aspects of the disclosure.

### DETAILED DESCRIPTION

Retaining devices disclosed herein are configured to retain minicolumns in a holder plate as aspiration needles are withdrawn the minicolumns.

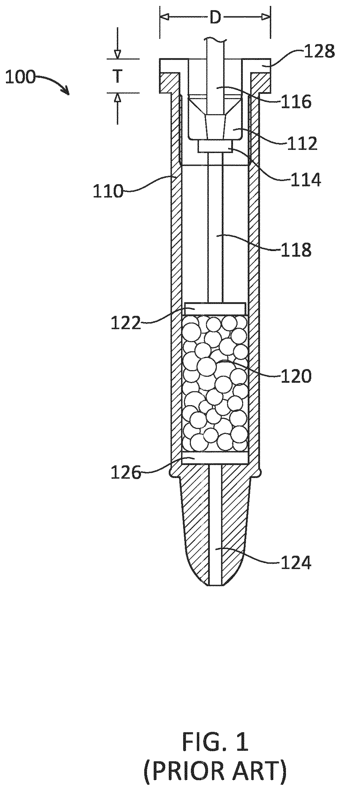

Referring to FIG.1, an exemplary prior art miniaturized chromatography column 100 (also referred to as a minicolumn or RoboColumn) is shown. This particular minicolumn is available from Atoll GmbH headquartered in Baden-Wuerttemberg, Germany. Minicolumn 100 includes an elongated column tube 110 with a needle port 112 located near its top end. Needle port 112 includes an O-ring seal 114 configured to contact the outer circumference of an aspiration needle 116 (partially shown) when the distal end of needle 116 is inserted into minicolumn 100 to deliver and or extract liquid. Needle 116 may be manually operated or robotically controlled, as will be subsequently described in more detail.

Minicolumn 100 includes an inlet capillary 118 that fluidically communicates with resin chamber 120 through top filter 122. A capillary outlet 124 also fluidically communicates with resin chamber 120 through bottom filter 126 as shown. Minicolumn 100 may be provided with a flange 128 on its upper end as shown. Flange 128 has a thickness T and a diameter D that is greater than the diameter of the main portion of column tube 110. In some implementations, the minicolumn 100 holds 0.2 mL, 0.6 mL or a greater or lesser volume. Minicolumns 100 typically are sold repacked with resin.

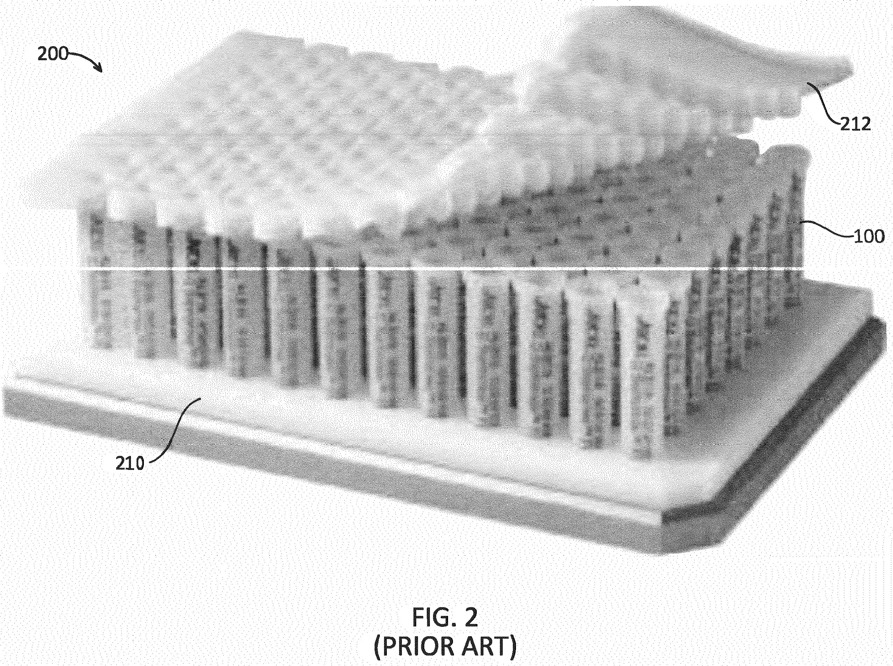

Referring to FIG. 2, minicolumns 100 are commercially available in a 96-column array 200. Array 200 is formed by a lower baseplate 210 having an 8 by 12 array of blind holes for receiving the bottoms of the minicolumns 100 as shown. A common top seal 212 may be provided for sealing the tops of the 96 minicolumns 100.

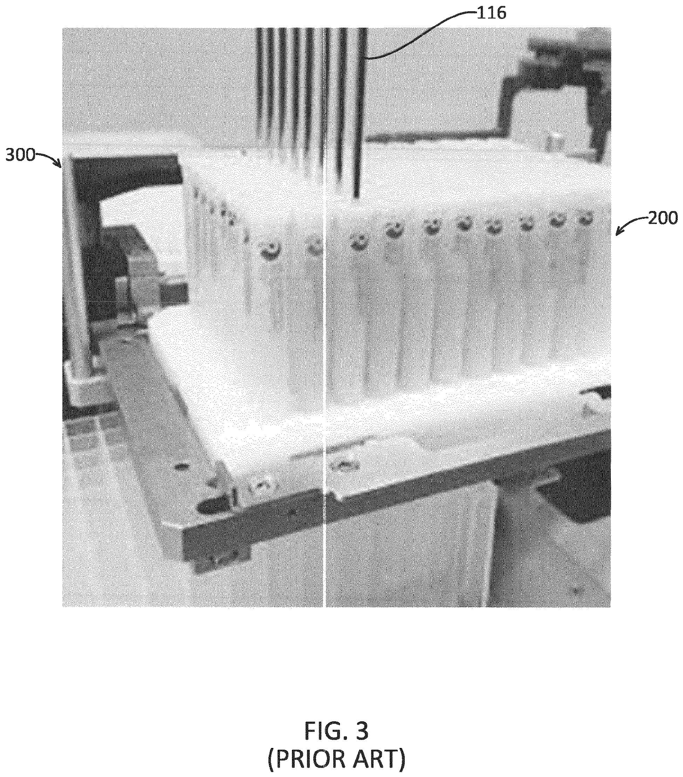

Referring to FIG. 3, an array 200 of minicolumns 100 is shown in use with a robotic liquid handling workstation 300. Workstation 300 includes a line of eight aspiration needles 116 arranged in a line and spaced apart such that they can be lowered into one line at a time of minicolumns 100 in array 200. In this manner, workstation 300 is able to insert liquid into and or withdraw liquid from the eight minicolumns 100 simultaneously. Once needles 116 are raised such they are fully withdrawn from the minicolumns 100, the needles 116 may be moved laterally with respect to array 200 such that they can then be introduced into a different line of eight minicolumns 100.

When needles 116 are being withdrawn from minicolumns 100, the frictional force between the O-rings 114 (shown in FIG. 1) and needles 116 may sometimes be greater than the friction force between the bottom of minicolumns 100 and lower baseplate 210 (shown in FIG. 2) plus the weight of the minicolumns 100. This causes one or more of the minicolumns 210 to be undesirably lifted out of its nest in baseplate 210. The lifted minicolumn(s) may continue to stick to needle(s) 116 or may fall off in an undesired location. Such movement of minicolumns 100 can delay or ruin the associated process, and or can cause needles 116, minicolumns 100 or other components of robotic workstation 300 to crash into one another causing damage to the equipment. As will be subsequently described, the applicants of the present disclosure have discovered methods and apparatuses for preventing this unwanted lifting of minicolumns 100 from occurring.

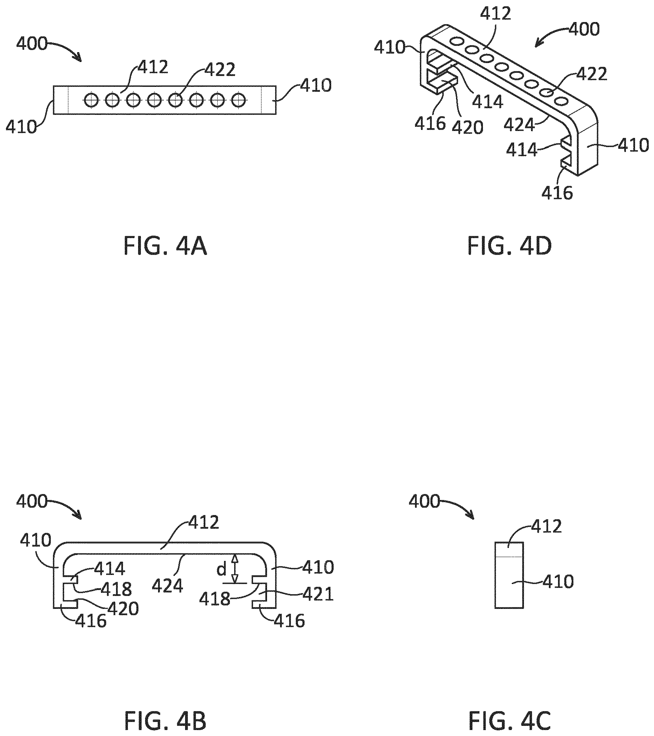

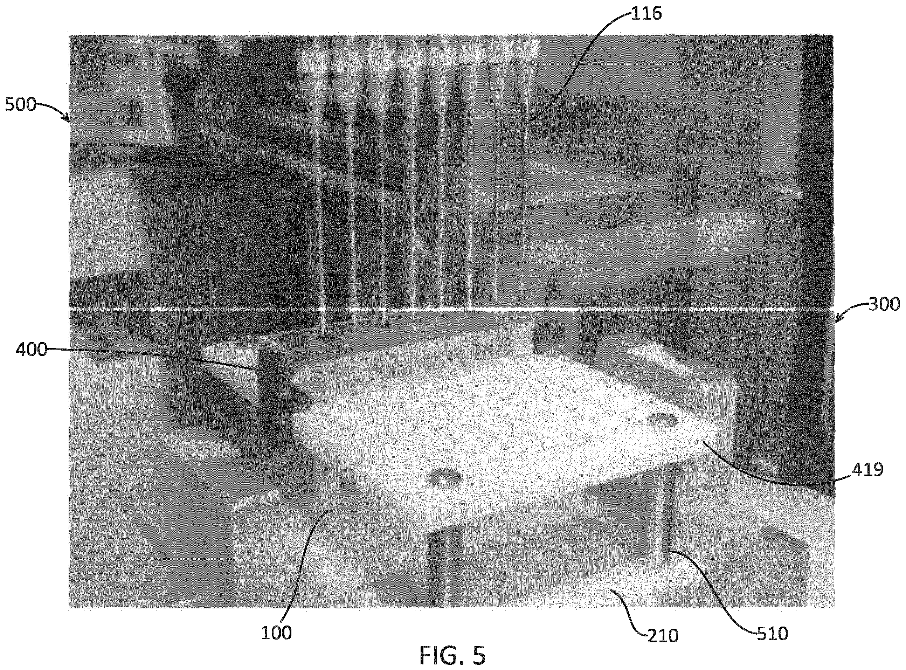

Referring to FIGS. 4A-4D, an exemplary embodiment of a minicolumn retaining device 400 constructed according to aspects of the disclosure is provided. In this exemplary embodiment, retaining device 400 is formed from a single, unitary piece of material, such as stainless steel, aluminum or a thermoplastic. Device 400 includes a pair of laterally spaced apart upright supports 410. The upright supports 410 are held in the laterally spaced apart relationship by a horizontal beam 412 that spans between the upright supports 410. Each upright support 410 includes a pair of inwardly protruding flanges 414, 416. The top flanges 414 are provided with a downwardly facing surface 418 configured to slidably rest upon an upper surface of a minicolumn holder plate 419 (shown in FIG. 5.) The bottom flanges 416 are provided with an upwardly facing surface 420 configured to slidably contact a lower surface of the holder plate 419. Each pair of inwardly protruding flanges 414, 416 forms a gap 421 there-between that has a thickness that is greater than a thickness of holder plate 419. The purpose of these surfaces and gaps will be subsequently described in reference to FIG. 5.

In alternative embodiments (not shown), downwardly facing surface 418 and upwardly facing surface 420 can be formed on opposing surfaces of a slot extending into upright support 410 rather than the pairs of inwardly protruding flanges 414, 416 shown in FIGS. 4B and 4D.

Horizontal beam 412 may be provided with a plurality of vertical through-holes 422 along its length. In this exemplary embodiment, eight holes 422 are provided. Holes 422 have the same spacing as the spacing between the minicolumns 100 (shown in FIG. 3), such that the eight holes through horizontal beam 412 line up with the tops of the eight minicolumns 100 in one row of array 200. The holes 422 each have a diameter larger than the outer diameter of aspiration needles 116, thereby allowing needles 116 (shown in FIGS 1 and 3) to pass through holes 422. The diameter of holes 422 is also smaller than an outside diameter D (shown in FIG. 1) of an upper portion of a minicolumn 100, thereby preventing minicolumns 100 from passing through holes 422.

Horizontal beam 412 has a bottom surface 424 that is used to contact the top surface of any minicolumn 100 that is being inadvertently lifted during use. Bottom surface 424 is spaced apart from the downwardly facing surfaces 418 of the upright supports 410 by a distance d (shown in FIG. 4B) that is greater than an amount that a minicolumn 100 would protrude from an upper surface of a holder plate 419 (shown in FIG. 5.) This arrangement allows enough room for flange 128 (shown in FIG. 1), if minicolumn 100 is so equipped, to extend above holder plate 419 without hitting device 400. In some embodiments, this distance d is only slightly greater than the thickness T (shown in FIG. 1) of flange 128 such that if minicolumn 100 is being lifted during needle withdrawal, it only rises a small amount before being contacted by bottom surface 424. In some embodiments, distance d is less than 2 mm or less than 1 mm longer than thickness T.

Referring to FIG. 5, use of exemplary retaining device 400 with a robotic liquid handling workstation 300 and retaining system 500 is shown and will be described. In some implementations, an upper minicolumn holder plate 419 may be provided above a lower baseplate 210, spaced apart therefrom by four standoffs 510. Baseplate 210 may be the standard baseplate provided with minicolumn array 200 (shown in FIG. 2), may be a bespoke plate with 96 wells provided therein, or may simply be a flat plate or benchtop. Holder plate 419 may be attached to standoffs 510 with fasteners and provided with an 8 by 12 array of through-holes sized to slidably receive the minicolumns 100 therethrough. The thickness of holder plate 419 may be slightly smaller than the thickness of gaps 421 (shown in FIG. 4B) and have a width slightly smaller than the distance between upright supports 410 such that device 400 is able to slide along the edges of holder plate 419 without binding and without having excess play.

In use, the minicolumn holder apparatus, comprising base plate 210, standoffs 510 and holder plate 419, is located in robotic liquid handling workstation 300 and may be fastened thereto to prevent movement relative to the workstation. In some embodiments, the location and orientation is either manually or automatically registered with respect to the motion of the robotically controlled needles 116. Minicolumns 100 may then be placed into holder apparatus. When loaded into holder plate 419, the tops of minicolumns 100 may protrude above the plate by a predetermined amount, as shown. Retainer device 400 may be slid onto holder plate 419 and aligned with a row of minicolumns 100 such that it covers the tops of the minicolumns 100, as shown. A robotically controlled process may then be initiated. Holes 412 (shown in FIGS. 4A and 4D) allow needles 116 to pass through retaining device 400 and into minicolumns 100. If any minicolumns 100 stick to needles 116 when the needles are being raised, the top edge of the minicolumn will contact the bottom surface 424 (shown in FIGS. 4B and 4D) and retaining device 400 will maintain the minicolumn in place. If more than one row of the minicolumn array is being accessed with the needles 116, retaining device 400 may be manually or robotically slid along holder plate 419 to that row to hold its minicolumns in place.

In alternative embodiments (not shown), retaining device 400 may be provided with more than one row of holes in order to retain more than one row of minicolumns at a time. In some embodiments, the retaining device may cover the entire array at once. Clips or other fastening devices may be utilized to removably couple the retaining device to a holder plate.

While exemplary embodiments of the present disclosure have been shown and described herein, it will be obvious to those skilled in the art that such embodiments are provided by way of example only. Numerous variations, changes, and substitutions will now occur to those skilled in the art without departing from the disclosure. It should be understood that various alternatives to the embodiments of the disclosure described herein may be employed in practicing the disclosure. Numerous different combinations of embodiments described herein are possible, and such combinations are considered part of the present disclosure. In addition, all features discussed in connection with any one embodiment herein can be readily adapted for use in other embodiments herein. It is intended that the following claims define the scope of the invention.

When a feature or element is herein referred to as being "on" another feature or element, it can be directly on the other feature or element or intervening features and/or elements may also be present. In contrast, when a feature or element is referred to as being "directly on" another feature or element, there are no intervening features or elements present. It will also be understood that, when a feature or element is referred to as being "connected", "attached" or "coupled" to another feature or element, it can be directly connected, attached or coupled to the other feature or element or intervening features or elements may be present. In contrast, when a feature or element is referred to as being "directly connected", "directly attached" or "directly coupled" to another feature or element, there are no intervening features or elements present. Although described or shown with respect to one embodiment, the features and elements so described or shown can apply to other embodiments. It will also be appreciated by those of skill in the art that references to a structure or feature that is disposed "adjacent" another feature may have portions that overlap or underlie the adjacent feature.

Terminology used herein is for the purpose of describing particular embodiments only and is not intended to be limiting of the disclosure. For example, as used herein, the singular forms "a", "an" and "the" are intended to include the plural forms as well, unless the context clearly indicates otherwise. It will be further understood that the terms "comprises" and/or "comprising," when used in this specification, specify the presence of stated features, steps, operations, elements, and/or components, but do not preclude the presence or addition of one or more other features, steps, operations, elements, components, and/or groups thereof. As used herein, the term "and/or" includes any and all combinations of one or more of the associated listed items and may be abbreviated as "/".

Spatially relative terms, such as "under", "below", "lower", "over", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if a device in the figures is inverted, elements described as "under" or "beneath" other elements or features would then be oriented "over" the other elements or features. Thus, the exemplary term "under" can encompass both an orientation of over and under. The device may be otherwise oriented (rotated 90 degrees or at other orientations) and the spatially relative descriptors used herein interpreted accordingly. Similarly, the terms "upwardly", "downwardly", "vertical", "horizontal" and the like are used herein for the purpose of explanation only unless specifically indicated otherwise.

Although the terms "first" and "second" may be used herein to describe various features/elements (including steps), these features/elements should not be limited by these terms, unless the context indicates otherwise. These terms may be used to distinguish one feature/element from another feature/element. Thus, a first feature/element discussed below could be termed a second feature/element, and similarly, a second feature/element discussed below could be termed a first feature/element without departing from the teachings of the present disclosure.

Throughout this specification and the claims which follow, unless the context requires otherwise, the word "comprise", and variations such as "comprises" and "comprising" means various components can be co-jointly employed in the methods and articles (e.g., compositions and apparatuses including device and methods). For example, the term "comprising" will be understood to imply the inclusion of any stated elements or steps but not the exclusion of any other elements or steps.

In general, any of the apparatuses and/or methods described herein should be understood to be inclusive, but all or a sub-set of the components and/or steps may alternatively be exclusive, and may be expressed as "consisting of" or alternatively "consisting essentially of" the various components, steps, sub-components or sub-steps.

As used herein in the specification and claims, including as used in the examples and unless otherwise expressly specified, all numbers may be read as if prefaced by the word "about" or "approximately," even if the term does not expressly appear. The phrase "about" or "approximately" may be used when describing magnitude and/or position to indicate that the value and/or position described is within a reasonable expected range of values and/or positions. For example, a numeric value may have a value that is +/- 0.1% of the stated value (or range of values), +/- 1% of the stated value (or range of values), +/- 2% of the stated value (or range of values), +/- 5% of the stated value (or range of values), +/- 10% of the stated value (or range of values), etc. Any numerical values given herein should also be understood to include about or approximately that value, unless the context indicates otherwise. For example, if the value "10" is disclosed, then "about 10" is also disclosed. Any numerical range recited herein is intended to include all sub-ranges subsumed therein. It is also understood that when a value is disclosed that "less than or equal to" the value, "greater than or equal to the value" and possible ranges between values are also disclosed, as appropriately understood by the skilled artisan. For example, if the value "X" is disclosed the "less than or equal to X" as well as "greater than or equal to X" (e.g., where X is a numerical value) is also disclosed. It is also understood that the throughout the application, data is provided in a number of different formats, and that this data, represents endpoints and starting points, and ranges for any combination of the data points. For example, if a particular data point "10" and a particular data point "15" are disclosed, it is understood that greater than, greater than or equal to, less than, less than or equal to, and equal to 10 and 15 are considered disclosed as well as between 10 and 15. It is also understood that each unit between two particular units are also disclosed. For example, if 10 and 15 are disclosed, then 11, 12, 13, and 14 are also disclosed.

Although various illustrative embodiments are described above, any of a number of changes may be made to various embodiments without departing from the scope of the invention as described by the claims. For example, the order in which various described method steps are performed may often be changed in alternative embodiments, and in other alternative embodiments one or more method steps may be skipped altogether. Optional features of various device and system embodiments may be included in some embodiments and not in others. Therefore, the foregoing description is provided primarily for exemplary purposes and should not be interpreted to limit the scope of the invention as it is set forth in the claims. When a feature is described as optional, that does not necessarily mean that other features not described as optional are required.

## Claims

1. A retaining apparatus (400) configured to secure minicolumns (100) in a holder plate, the retaining apparatus comprising:
a pair of laterally spaced apart upright supports (410), each upright support comprising:
a downwardly facing surface (418) configured to slidably rest upon an upper surface of a minicolumn holder plate (419); and
an upwardly facing surface (420) configured to slidably contact a lower surface of the holder plate (419); and
a horizontal beam (412) spanning between the upright supports (410) and holding them in the laterally spaced apart relationship, the horizontal beam (412) having a plurality of vertical through-holes (422) along its length, the through-holes (422) having a diameter larger than an aspiration needle (116) and smaller than an outside diameter of an upper portion of a minicolumn (100), the horizontal beam (412) having a bottom surface (424) spaced apart from the downwardly facing surfaces (418) of the upright supports (410) a distance that is greater than an amount that a minicolumn (100) would protrude from an upper surface of a holder plate (419),
wherein the apparatus is configured to contact the holder plate (419) only along peripheral edges of the holder plate (419) and is configured to slide along the holder plate (419) after minicolumns (100) have been inserted therein, thereby retaining the minicolumns (100) in the holder plate (419) but allowing access to the minicolumns (100) through the vertical holes (422) in the horizontal beam (412); and
wherein the apparatus is integrally formed from a single piece of material.

2. The apparatus of claim 1, wherein the horizontal beam has at least three through-holes arranged in a single row along its length.

3. The apparatus of claim 1, wherein the horizontal beam has at least eight through-holes arranged in a single row along its length.

4. The apparatus of claim 1, wherein the horizontal beam has at least two rows of through-holes arranged along its length.

5. The apparatus of claim 1, wherein the pair of upright supports each comprise at least two pairs of downwardly facing and upwardly facing surfaces (418, 420), thereby allowing the horizontal beam to be positioned at at least two different heights above a minicolumn holder plate to accommodate different lengths of minicolumns.

6. The apparatus of claim 1, wherein the downwardly facing surface (418) of each upright support is formed by a first inwardly protruding flange (414), and the upwardly facing surface (420) of each upright support is formed by a second inwardly protruding flange (416), each pair of first and second inwardly protruding flanges (414, 416) forming a gap there-between that has a thickness that is greater than a thickness of a minicolumn holder plate.

7. A retaining system configured to secure minicolumns (100) in place, the system comprising:
an upper holder plate (419), the upper holder plate having a plurality of vertical holes there-through arranged in at least one row, each hole being configured to slidably receive a minicolumn (100) and constrain an upper portion of the minicolumn (100) from lateral movement; and
a retaining apparatus (400) according to claim 1.

8. The retaining system of claim 7, further comprising standoffs (510) configured to position the upper holder plate a predetermined distance above a lower horizontal surface.

9. The retaining system of claim 8, further comprising a lower holder plate (210) which forms the lower horizonal surface, the lower holder plate having a recess or hole directly below each vertical hole in the upper holder plate, each recess or hole being configured to receive a bottom portion of a minicolumn in order to constrain it from lateral movement.

10. The retaining system of claim 9, further comprising a plurality of minicolumns.

11. The retaining system of claim 7, wherein the horizontal beam (412) has at least three through-holes arranged in a single row along its length.

12. The retaining system of claim 7, wherein the horizontal beam (412) has at least eight through-holes arranged in a single row along its length.

13. The retaining system of claim 7, wherein the horizontal beam (412) has at least two rows of through-holes arranged along its length.

14. The retaining system of claim 7, wherein the pair of upright supports each comprise at least two pairs of downwardly facing and upwardly facing surfaces (418, 420), thereby allowing the horizontal beam to be positioned at at least two different heights above the upper holder plate to accommodate different lengths of minicolumns.

15. The retaining system of claim 7, wherein the downwardly facing surface (418) of each upright support is formed by a first inwardly protruding flange (414), and the upwardly facing surface (420) of each upright support is formed by a second inwardly protruding flange (416), each pair of first and second inwardly protruding flanges (414, 416) forming a gap there-between that has a thickness that is greater than a thickness of the upper holder plate.

16. A method of retaining a plurality of minicolumns (100), the method comprising:
providing a holder plate (419) having a plurality of vertical hole (422) there-through;
placing a plurality of minicolumns (100) into the plurality of holes in the holder plate (419) such that at least some of the minicolumns (100) are in a first row;
sliding a retaining apparatus (400) according to claim 1 along the holder plate (419) until it covers the first row of minicolumns (100), the retaining apparatus (400) having a vertical hole (422) therethrough above each of the minicolumns (100);
inserting an aspiration needle (116) through at least one of the vertical holes (422) in the retaining apparatus (400) and into at least one of the minicolumns (100) in the first row;
withdrawing the aspiration needle (116) from the at least one minicolumn (100) and the at least one vertical hole (422) in the retaining apparatus (400);
whereby the retaining apparatus (400) has a lower surface (424) that contacts a top surface of any of the minicolumns (100) in the first row that rise during the withdrawing step, the lower surface (424) serving to retain the rising minicolumns (100) in the holder plate (419).

17. The method of claim 16, wherein multiple aspiration needles (116) are inserted into and withdrawn from multiple vertical holes in the retaining apparatus and multiple minicolumns in the first row simultaneously.

18. The method of claim 16, wherein the aspiration needle (116) is automatically moved vertically down into and then vertically withdrawn upwards from the minicolumn and vertical hole by a robotic liquid handling workstation.

19. The method of claim 16, wherein the aspiration needle (116) is automatically moved horizontally from the first row of minicolumns to a second row of minicolumns by a robotic liquid handling workstation.

## Patentansprüche

1. Haltevorrichtung (400), die zum Sichern von Minisäulen (100) in einer Halteplatte konfiguriert ist, wobei die Haltevorrichtung Folgendes umfasst:
ein Paar seitlich beabstandeter aufrechter Stützen (410), wobei jede aufrechte Stütze Folgendes umfasst:
eine nach unten weisende Oberfläche (418), die so konfiguriert ist, dass sie verschiebbar auf einer oberen Oberfläche einer Minisäulen-Halteplatte (419) aufliegt; und
eine nach oben weisende Oberfläche (420), die so konfiguriert ist, dass sie verschiebbar mit einer unteren Oberfläche der Halteplatte (419) in Kontakt steht; und
einen horizontalen Träger (412), der sich zwischen den aufrechten Stützen (410) erstreckt und sie in der seitlich beabstandeten Beziehung hält, wobei der horizontale Träger (412) eine Vielzahl von vertikalen Durchgangslöchern (422) entlang seiner Länge aufweist, wobei die Durchgangslöcher (422) einen Durchmesser aufweisen, der größer als eine Aspirationsnadel (116) und kleiner als ein Außendurchmesser eines oberen Abschnitts einer Minisäule (100) ist, wobei der horizontale Träger (412) eine untere Oberfläche (424) aufweist, die von den nach unten weisenden Oberflächen (418) der aufrechten Stützen (410) um einen Abstand beabstandet ist, der größer als eine Länge ist, um die eine Minisäule (100) von einer oberen Oberfläche einer Halteplatte (419) vorstehen würde,
wobei die Vorrichtung so konfiguriert ist, dass sie die Halteplatte (419) nur entlang Umfangskanten der Halteplatte (419) berührt, und so konfiguriert ist, dass sie entlang der Halteplatte (419) gleitet, nachdem Minisäulen (100) darin eingeführt wurden, wodurch die Minisäulen (100) in der Halteplatte (419) gehalten werden, aber Zugang zu den Minisäulen (100) durch die vertikalen Löcher (422) in dem horizontalen Träger (412) ermöglicht wird; und
wobei die Vorrichtung einstückig aus einem einzigen Materialstück gebildet ist.

2. Vorrichtung nach Anspruch 1, wobei der horizontale Träger mindestens drei Durchgangslöcher aufweist, die in einer einzigen Reihe entlang dessen Länge angeordnet sind.

3. Vorrichtung nach Anspruch 1, wobei der horizontale Träger mindestens acht Durchgangslöcher aufweist, die in einer einzigen Reihe entlang dessen Länge angeordnet sind.

4. Vorrichtung nach Anspruch 1, wobei der horizontale Träger mindestens zwei Reihen von Durchgangslöchern aufweist, die entlang dessen Länge angeordnet sind.

5. Vorrichtung nach Anspruch 1, wobei das Paar aufrechter Stützen jeweils mindestens zwei Paare nach unten weisender und nach oben weisender Oberflächen (418, 420) umfasst, wodurch ermöglicht wird, dass der horizontale Träger in mindestens zwei unterschiedlichen Höhen über einer Minisäulen-Halteplatte positioniert wird, um unterschiedliche Längen von Minisäulen aufzunehmen.

6. Vorrichtung nach Anspruch 1, wobei die nach unten weisende Oberfläche (418) jeder aufrechten Stütze durch einen ersten nach innen vorstehenden Flansch (414) gebildet wird und die nach oben weisende Oberfläche (420) jeder aufrechten Stütze durch einen zweiten nach innen vorstehenden Flansch (416) gebildet wird, wobei jedes Paar erster und zweiter nach innen vorstehender Flansche (414, 416) einen Spalt dazwischen bildet, der eine Dicke aufweist, die größer als eine Dicke einer Minisäulen-Halteplatte ist.

7. Haltesystem, das zum Sichern von Minisäulen (100) an einer Stelle konfiguriert ist, wobei das System Folgendes umfasst:
eine obere Halteplatte (419), wobei die obere Halteplatte eine Vielzahl von vertikalen Löchern durch diese aufweist, die in mindestens einer Reihe angeordnet sind, wobei jedes Loch so konfiguriert ist, dass es verschiebbar eine Minisäule (100) aufnimmt und einen oberen Abschnitt der Minisäule (100) in der seitlichen Bewegung einschränkt; und
eine Haltevorrichtung (400) nach Anspruch 1.

8. Haltesystem nach Anspruch 7, das ferner Abstandshalter (510) umfasst, die so konfiguriert sind, dass sie die obere Halteplatte in einem vorbestimmten Abstand über einer unteren horizontalen Oberfläche positionieren.

9. Haltesystem nach Anspruch 8, das ferner eine untere Halteplatte (210) umfasst, welche die untere horizontale Oberfläche bildet, wobei die untere Halteplatte eine Aussparung oder ein Loch direkt unter jedem vertikalen Loch in der oberen Halteplatte aufweist, wobei jede Aussparung oder jedes Loch so konfiguriert ist, dass sie einen unteren Abschnitt einer Minisäule aufnimmt, um sie in der seitlichen Bewegung einzuschränken.

10. Haltesystem nach Anspruch 9, das ferner eine Vielzahl von Minisäulen umfasst.

11. Haltesystem nach Anspruch 7, wobei der horizontale Träger (412) mindestens drei Durchgangslöcher aufweist, die in einer einzigen Reihe entlang dessen Länge angeordnet sind.

12. Haltesystem nach Anspruch 7, wobei der horizontale Träger (412) mindestens acht Durchgangslöcher aufweist, die in einer einzigen Reihe entlang dessen Länge angeordnet sind.

13. Haltesystem nach Anspruch 7, wobei der horizontale Träger (412) mindestens zwei Reihen von Durchgangslöchern aufweist, die entlang dessen Länge angeordnet sind.

14. Haltesystem nach Anspruch 7, wobei das Paar aufrechter Stützen jeweils mindestens zwei Paare nach unten weisender und nach oben weisender Oberflächen (418, 420) umfasst, wodurch ermöglicht wird, dass der horizontale Träger in mindestens zwei unterschiedlichen Höhen über der oberen Halteplatte positioniert wird, um unterschiedliche Längen von Minisäulen aufzunehmen.

15. Haltesystem nach Anspruch 7, wobei die nach unten weisende Oberfläche (418) jeder aufrechten Stütze durch einen ersten nach innen vorstehenden Flansch (414) gebildet wird und die nach oben weisende Oberfläche (420) jeder aufrechten Stütze durch einen zweiten nach innen vorstehenden Flansch (416) gebildet wird, wobei jedes Paar erster und zweiter nach innen vorstehender Flansche (414, 416) einen Spalt dazwischen bildet, der eine Dicke aufweist, die größer als eine Dicke der oberen Halteplatte ist.

16. Verfahren zum Halten einer Vielzahl von Minisäulen (100), wobei das Verfahren Folgendes umfasst:
Bereitstellen einer Halteplatte (419) mit einer Vielzahl von vertikalen Löchern (422) durch diese;
Platzieren einer Vielzahl von Minisäulen (100) in die Vielzahl von Löchern in der Halteplatte (419), sodass sich mindestens einige der Minisäulen (100) in einer ersten Reihe befinden;
Verschieben einer Haltevorrichtung (400) nach Anspruch 1 entlang der Halteplatte (419), bis sie die erste Reihe von Minisäulen (100) abdeckt, wobei die Haltevorrichtung (400) ein vertikales Loch (422) dadurch über jeder der Minisäulen (100) aufweist;
Einführen einer Aspirationsnadel (116) durch mindestens eines der vertikalen Löcher (422) in der Haltevorrichtung (400) und in mindestens eine der Minisäulen (100) in der ersten Reihe;
Herausziehen der Aspirationsnadel (116) aus der mindestens einen Minisäule (100) und dem mindestens einen vertikalen Loch (422) in der Haltevorrichtung (400);
wodurch die Haltevorrichtung (400) eine untere Oberfläche (424) aufweist, die mit einer oberen Oberfläche einer der Minisäulen (100) in der ersten Reihe in Kontakt steht, die während des Schritts des Herausziehens angehoben werden, wobei die untere Oberfläche (424) dazu dient, die angehobenen Minisäulen (100) in der Halteplatte (419) zu halten.

17. Verfahren nach Anspruch 16, wobei mehrere Aspirationsnadeln (116) gleichzeitig in mehrere vertikale Löcher in der Haltevorrichtung und mehrere Minisäulen in der ersten Reihe eingeführt und aus diesen herausgezogen werden.

18. Verfahren nach Anspruch 16, wobei die Aspirationsnadel (116) durch eine robotergesteuerte Flüssigkeits-Handhabungsarbeitsstation automatisch vertikal nach unten in die Minisäule und das vertikale Loch bewegt und dann vertikal nach oben aus diesen herausgezogen wird.

19. Verfahren nach Anspruch 16, wobei die Aspirationsnadel (116) durch eine robotergesteuerte Flüssigkeits-Handhabungsarbeitsstation automatisch horizontal von der ersten Reihe von Minisäulen zu einer zweiten Reihe von Minisäulen bewegt wird.

## Revendications

1. Appareil de retenue (400) conçu pour fixer des mini-colonnes (100) dans une plaque de support, l'appareil de retenue comprenant :
une paire de supports verticaux (410) espacés latéralement, chaque support vertical comprenant :
une surface orientée vers le bas (418) conçue pour reposer de manière coulissante sur une surface supérieure d'une plaque de support (419) de mini-colonnes ; et
une surface orientée vers le haut (420) conçue pour venir en contact de manière coulissante avec une surface inférieure de la plaque de support (419) ; et
un bras horizontal (412) s'étendant entre les supports verticaux (410) et les maintenant dans la relation espacée latéralement, le bras horizontal (412) ayant une pluralité d'orifices verticaux traversants (422) le long de sa longueur, les orifices traversants (422) ayant un diamètre supérieur à une aiguille d'aspiration (116) et inférieur à un diamètre externe d'une partie supérieure d'une mini-colonne (100), le bras horizontal (412) ayant une surface de fond (424) espacée des surfaces orientées vers le bas (418) des supports verticaux (410) d'une distance qui est supérieure à une quantité dont une mini-colonne (100) ferait saillie depuis une surface supérieure d'une plaque de support (419),
dans lequel l'appareil est conçu pour entrer en contact avec la plaque de support (419) uniquement le long des bords périphériques de la plaque de support (419) et est conçu pour coulisser le long de la plaque de support (419) après que les mini-colonnes (100) ont été insérées dans celle-ci, retenant ainsi les mini-colonnes (100) dans la plaque de support (419) mais permettant l'accès aux mini-colonnes (100) à travers les orifices verticaux (422) dans le bras horizontal (412) ; et
dans lequel l'appareil est formé intégralement d'une seule pièce de matériau.

2. Appareil selon la revendication 1, dans lequel le bras horizontal a au moins trois orifices traversants agencés en une seule rangée le long de sa longueur.

3. Appareil selon la revendication 1, dans lequel le bras horizontal a au moins huit orifices traversants agencés en une seule rangée le long de sa longueur.

4. Appareil selon la revendication 1, dans lequel le bras horizontal a au moins deux rangées d'orifices traversants agencées le long de sa longueur.

5. Appareil selon la revendication 1, dans lequel la paire de supports verticaux comprennent chacun au moins deux paires de surfaces orientée vers le bas et orientée vers le haut (418, 420), permettant ainsi au bras horizontal d'être positionné à au moins deux hauteurs différentes au-dessus d'une plaque de support de mini-colonnes pour s'adapter à différentes longueurs de mini-colonnes.

6. Appareil selon la revendication 1, dans lequel la surface orientée vers le bas (418) de chaque support vertical est formée par une première bride faisant saillie vers l'intérieur (414), et la surface orientée vers le haut (420) de chaque support vertical est formée par une seconde bride faisant saillie vers l'intérieur (416), chaque paire des première et seconde brides faisant saillie vers l'intérieur (414, 416) formant un espace entre celles-ci qui a une épaisseur qui est supérieure à une épaisseur d'une plaque de support de mini-colonnes.

7. Système de retenue conçu pour fixer des mini-colonnes (100) en place, le système comprenant :
une plaque de support (419) supérieure, la plaque de support supérieure ayant une pluralité d'orifices verticaux traversants agencés en au moins une rangée, chaque orifice étant conçu pour recevoir de manière coulissante une mini-colonne (100) et empêcher une partie supérieure de la mini-colonne (100) de tout mouvement latéral ; et
un appareil de retenue (400) selon la revendication 1.

8. Système de retenue selon la revendication 7, comprenant en outre des entretoises (510) conçues pour positionner la plaque de support supérieure à une distance prédéterminée au-dessus d'une surface horizontale inférieure.

9. Système de retenue selon la revendication 8, comprenant en outre une plaque de support inférieure (210) qui forme la surface horizontale inférieure, la plaque de support inférieure ayant un évidement ou un orifice directement en dessous de chaque orifice vertical dans la plaque de support supérieure, chaque évidement ou orifice étant conçu pour recevoir une partie de fond d'une mini-colonne afin d'empêcher tout mouvement latéral de celle-ci.

10. Système de retenue selon la revendication 9, comprenant en outre une pluralité de mini-colonnes.

11. Système de retenue selon la revendication 7, dans lequel le bras horizontal (412) a au moins trois orifices traversants agencés en une seule rangée le long de sa longueur.

12. Système de retenue selon la revendication 7, dans lequel le bras horizontal (412) a au moins huit orifices traversants agencés en une seule rangée le long de sa longueur.

13. Système de retenue selon la revendication 7, dans lequel le bras horizontal (412) a au moins deux rangées d'orifices traversants agencées le long de sa longueur.

14. Système de retenue selon la revendication 7, dans lequel la paire de supports verticaux comprennent chacun au moins deux paires de surfaces orientée vers le bas et orientée vers le haut (418, 420), permettant ainsi au bras horizontal d'être positionné à au moins deux hauteurs différentes au-dessus de la plaque de support supérieure pour s'adapter à différentes longueurs de mini-colonnes.

15. Système de retenue selon la revendication 7, dans lequel la surface orientée vers le bas (418) de chaque support vertical est formée par une première bride faisant saillie vers l'intérieur (414), et la surface orientée vers le haut (420) de chaque support vertical est formée par une seconde bride faisant saillie vers l'intérieur (416), chaque paire des première et seconde brides faisant saillie vers l'intérieur (414, 416) formant un espace entre celles-ci qui a une épaisseur qui est supérieure à une épaisseur de la plaque de support supérieure.

16. Procédé de retenue d'une pluralité de mini-colonnes (100), le procédé comprenant :
la fourniture d'une plaque de support (419) ayant une pluralité d'orifices verticaux (422) traversants ;
le placement d'une pluralité de mini-colonnes (100) dans la pluralité d'orifices dans la plaque de support (419) de telle sorte qu'au moins certaines des mini-colonnes (100) sont dans une première rangée ;
le coulissement d'un appareil de retenue (400) selon la revendication 1 le long de la plaque de support (419) jusqu'à ce qu'il recouvre la première rangée de mini-colonnes (100), l'appareil de retenue (400) ayant un orifice vertical (422) traversant au-dessus de chacune des mini-colonnes (100) ;
l'insertion d'une aiguille d'aspiration (116) à travers au moins l'un des orifices verticaux (422) dans l'appareil de retenue (400) et dans au moins l'une des mini-colonnes (100) dans la première rangée ;
le retrait de l'aiguille d'aspiration (116) de l'au moins une mini-colonne (100) et de l'au moins un orifice vertical (422) dans l'appareil de retenue (400) ;
moyennant quoi l'appareil de retenue (400) a une surface inférieure (424) qui entre en contact avec une surface supérieure de n'importe laquelle des mini-colonnes (100) dans la première rangée qui s'élèvent pendant l'étape de retrait, la surface inférieure (424) servant à retenir les mini-colonnes (100) qui s'élèvent dans la plaque de support (419).

17. Procédé selon la revendication 16, dans lequel plusieurs aiguilles d'aspiration (116) sont simultanément insérées dans et retirées de plusieurs orifices verticaux dans l'appareil de retenue et de plusieurs mini-colonnes dans la première rangée.

18. Procédé selon la revendication 16, dans lequel l'aiguille d'aspiration (116) est automatiquement déplacée verticalement vers le bas dans puis retirée verticalement vers le haut de la mini-colonne et de l'orifice vertical par une station de travail robotisée de manipulation des liquides.

19. Procédé selon la revendication 16, dans lequel l'aiguille d'aspiration (116) est automatiquement déplacée horizontalement de la première rangée de mini-colonnes jusqu'à une seconde rangée de mini-colonnes par une station de travail robotisée de manipulation des liquides.
